# EUROPÄISCHE PATENTSCHRIFT

(11) **EP 3 184 828 B1**
(45) Veröffentlichungstag und Bekanntmachung des Hinweises auf die Patenterteilung: **28.08.2019**
(21) Anmeldenummer: 16200897.3
(22) Anmeldetag: 28.11.2016
(51) Int. Cl.: F16B 12/24

(54) **BEFESTIGUNGSVORRICHTUNG**
ATTACHMENT DEVICE
DISPOSITIF DE FIXATION

(30) Priorität: 22.12.2015 DE 202015008847 U
(43) Veröffentlichungstag der Anmeldung: 28.06.2017
(73) Patentinhaber: Grass GmbH, 6973 Höchst (AT)
(72) Erfinder: Mätzler, Dominik, 6866 Andelsbuch (AT)
(74) Vertreter: Patentanwälte Magenbauer & Kollegen Partnerschaft mbB

(56) Entgegenhaltungen:
- WO-A2-2012/150490
- DE-A1- 19 830 740
- DE-A1-102010 051 372
- DE-A1-102013 106 409
- DE-U1-202004 000 199
- US-A- 1 285 245
- US-A- 5 810 505

## Beschreibung

Die Erfindung betrifft eine Befestigungsvorrichtung mit einem Dübel und einem am Dübel fixierten Verbindungselement zum Befestigen eines ersten Möbelteils an einem zweiten Möbelteil, wobei der Dübel in einem Sackloch oder in einer Durchgangsöffnung des einen Möbelteils lagerbar und mittels des Verbindungselements fixierbar ist.

Um zwei Bauteile, insbesondere Möbelteile lösbar miteinander zu verbinden, gibt es mehrere Möglichkeiten. Im Holzbau und/oder Möbelbau sind dazu Verbindungen mittels eines Spreizdübels bekannt. Dabei wird im ersten Bauteil der Spreizdübel mit einem Verbindungselement in eine vorhandene Bohrung eingebracht und im anderen Bauteil ist das Gegenstück vorgesehen, welches z.B. aus einem Exzenterbauteil bestehen kann. Mit dem Exzenterbauteil kann man über das Verbindungselement die beiden Bauteile möglichst ohne Spiel miteinander verbinden.

Derartige Befestigungsvorrichtungen mit Dübel und Verbindungselement finden in der Möbelindustrie, beispielsweise bei Möbelverbindern, aber auch bei der Befestigung von Montageplatten, für Scharniere oder dergleichen vielfältige Verwendung. Aus der AT 348 183 B und der AT 352 333 B sind Befestigungsvorrichtungen bekannt geworden, bei denen ein Spreizdübel in ein Sackloch einer Möbelseitenwand eingesteckt wird, so dass an diesem eine Montageplatte befestigt werden kann. Die DE 198 30 740 A1 offenbart eine Relingbefestigung für Schubladen, bei der ein Spreizdübel in eine Befestigungsbohrung einer Frontblende eingedreht wird, wobei im Dübel ein diesen axial überlagernder Kopfteil verankert werden kann. Für die Verankerung weist das Kopfteil einen Spreizkopf auf, der hakenartig in den Dübel eingeschoben wird und bei einem Verschwenken den Dübel aufspreizt.

Die DE 295 07 322 U1 zeigt ebenfalls eine Befestigung mit einer Verankerung, welche in der Frontblende von Schubladen verankert wird. Ferner ist ein Verstellteil vorgesehen, welches an einem Relingrohr befestigt ist. Das Verstellteil kann in die Verankerung eingesteckt werden, wobei durch das Verstellteil eine Längeneinstellung der Reling ermöglicht wird.

Aus der DE 295 18 690 U1 ist eine Befestigungsvorrichtungen bekannt geworden, bei der in der Frontblende einer Schublade ebenfalls ein Spreizdübel angeordnet wird, in welchem der Spreizdübel mittels eines geeigneten Spreizteils verankerbar ist. Durch Einführen des Spreizteils und Kippen der gesamten Anordnung wird das Spreizteil axial im Spreizdübel bewegt, so dass sich der Dübel spreizt und fest in der Frontblende verankert.

Die US 5,690,405 A offenbart eine Verbindungsanordnung zur Verbindung einer Reling mit einer Schubladenrückwand, wobei das Ende der Reling mit einem Befestigungsteil verbunden ist. Ein entsprechendes Befestigungsteil an der Schubladenrückwand besitzt einen offenen Schlitz, in welchen das Befestigungsteil eingehängt werden kann. Das Befestigungsteil besitzt ferner einen Schnapphaken, welcher hinter einer Kante des rückwandseitigen Teils einrastet und so die Verbindung sichert.

Die US 1,285,245 offenbart noch eine weitere Verbindungsanordnung.

Der Erfindung liegt die Aufgabe zugrunde, auf möglichst einfache Art und Weise zwei Möbelteile, insbesondere zwei Seitenwände mittels einer Befestigungsvorrichtung miteinander zu verbinden.

Diese Aufgabe wird bei einer Befestigungsvorrichtung mit einem Dübel und einem am Dübel fixierten Verbindungselement zum Befestigen eines ersten Möbelteils an einem zweiten Möbelteil, nach Anspruch 1 dadurch gelöst, dass der Dübel in einem Sackloch oder in einer Durchgangsöffnung des einen Möbelteils lagerbar und mittels des Verbindungselements fixierbar ist, wobei der Dübel mit einem Außengewinde versehen ist, und der Dübel Werkzeugangriffsflächen aufweist, in welche ein Werkzeug einsteckbar ist, über das der Dübel im Sackloch oder in der Durchgangsöffnung in seine Endlage drehbar ist.

Der Dübel wird nicht mittels des Verbindungselements in die Aufnahmeöffnung gedreht, sondern mittels eines separat am Dübel anzusetzenden Werkzeugs. Hierfür weist der Dübel wenigstens eine axiale und/oder radiale Werkzeugangriffsfläche auf, an welchem das Werkzeug ansetzt. Das Werkzeug selbst kann mannigfaltig ausgebildet sein, wobei auch Hakenschlüssel und dergleichen einsetzbar sind.

Erfindungsgemäß werden die Werkzeugangriffsflächen von wenigstens einer, insbesondere von zwei im Winkel, insbesondere im rechten Winkel, zueinander stehenden Nuten gebildet. In die Nut oder Nuten wird das entsprechende Werkzeug eingesetzt, so dass das erforderliche Drehmoment auf den Dübel übertragen werden kann. Sobald der Dübel seine Endlage erreicht hat, kann das Werkzeug aus der Nut entfernt werden.

Erfindungsgemäß ist die Nut oder sind die Nuten radial nach innen offen ausgebildet. Somit kann z.B. ein Hakenschlüssel, ein Schraubendreher, ein Kreuzschlitzdreher oder dergleichen schnell und einfach am Dübel angesetzt werden, ohne dass das Verbindungselement das Ansetzen und anschließende Drehen des Werkzeugs behindert.

Erfindungsgemäß sind die Nut oder Nuten radial nach innen und axial in Richtung des Verbindungselements offen. Das Außengewinde des Dübels wird durch die Nut nicht verletzt und kann vollständig, auch bei eingesetztem Werkzeug, in die Aufnahmeöffnung eingedreht werden.

Erfindungsgemäß ist das im Dübel sich befindende Ende des Verbindungselements kugelförmig ausgebildet, wobei der Dübel zur Aufnahme und Halterung des Endes eine Kugelpfanne aufweist. Die Kugelpfanne dient als Lager für das teilkugelförmige Ende des Verbindungselements, so dass dieses um das Zentrum des Lagers kippen kann und insbesondere von den Nuten weg geschwenkt werden kann um Raum zu schaffen, so dass ein Werkzeug in die Nut oder Nuten eingesetzt werden kann. Nach dem Entfernen des Werkzeugs wird das Verbindungselement wieder in die gewünschte Endlage zurück geschwenkt oder gekippt.

Um zu verhindern, dass das freie Ende des Verbindungselements aus der Kugelpfanne herausgezogen wird, verjüngt sich die Kugelpfanne in Richtung des Verbindungselements. Die Kugelpfanne weist lediglich eine Durchgangsöffnung für die Welle des Verbindungselements auf, so dass diese den Dübel durchgreifen kann.

Um das Verbindungselement, wie zuvor beschrieben, kippen oder schwenken zu können und im Bereich der Nut oder Nuten Raum zum Ansetzen eines Werkzeugs schaffen zu können, schließt sich im Dübel an die Kugelpfanne ein sich öffnender Kegelstumpf an, in welchem das Verbindungselement von der Nut oder den Nuten weg bewegbar ist. Im Mantel dieses Kegelstumpfes erstreckt oder erstrecken sich die Nut oder Nuten. An Stelle von Nuten sind auch ein oder mehrere axial verlaufende Bohrungen, Vorwölbungen, Kerben und/oder dergleichen denkbar, die auch an der Stirnseite des Dübels vorgesehen sein können.

Weitere Vorteile, Merkmale und Einzelheiten der Erfindung ergeben sich aus der nachfolgenden Beschreibung, in der unter die Bezugnahme auf die Zeichnung mehrere Ausführungsbeispiele der Erfindung beschrieben wird. Dabei können die in den Ansprüchen und der Beschreibung erwähnten und in der Zeichnung gezeigten Merkmale in jeder beliebigen Kombination erfindungswesentlich sein.

In der Zeichnung zeigen:
- Figur 1: eine Seitenansicht (teilweise aufgeschnitten) einer nicht erfindungsgemäßen Befestigungsvorrichtung gemäß einer ersten Ausführungsform einer ersten Variante in der Einbaulage;
- Figur 2: eine Seitenansicht (teilweise aufgeschnitten) einer anderen Ausführungsform in der Einbaulage;
- Figur 3: eine Seitenansicht der Variante der Figur 2 in der Endlage;
- Figur 4: eine Seitenansicht (teilweise aufgeschnitten) einer weiteren Ausführungsform in der Endlage unter Zuhilfenahme eine Montagewerkzeuges;
- Figur 5: eine perspektivische Ansicht einer nicht erfindungsgemäßen Befestigungsvorrichtung gemäß einer zweiten Variante;
- Figur 6: eine perspektivische Ansicht der Befestigungsvorrichtung gemäß der Erfindung;
- Figur 7: einen Längsschnitt der Variante gemäß Figur 6;
- Figur 8: eine perspektivische Ansicht einer nicht erfindungsgemäßen Befestigungsvorrichtung gemäß einer vierten Variante in der Einbaulage;
- Figur 9: einen Längsschnitt der Variante gemäß Figur 8 in der Endlage;
- Figur 10: eine Seitenansicht einer nicht erfindungsgemäßen Befestigungsvorrichtung gemäß einer anderen Ausführungsform der vierten Variante;
- Figur 11: eine perspektivische Ansicht der Variante gemäß Figur 10;
- Figur 12: eine Seitenansicht einer nicht erfindungsgemäßen Befestigungsvorrichtung gemäß einer weiteren Ausführungsform der vierten Variante;
- Figur 13: eine perspektivische Ansicht der Variante gemäß Figur 12;
- Figur 14: eine perspektivische Ansicht einer nicht erfindungsgemäßen Befestigungsvorrichtung gemäß einer fünften Variante;
- Figur 15: eine Seitenansicht der Variante gemäß Figur 14;
- Figur 16: eine perspektivische Ansicht einer nicht erfindungsgemäßen Befestigungsvorrichtung gemäß einer anderen Ausführungsform der fünften Variante;
- Figur 17: eine Seitenansicht der Variante gemäß Figur 16;
- Figur 18: eine perspektivische Ansicht einer nicht erfindungsgemäßen Befestigungsvorrichtung gemäß einer weiteren Ausführungsform der fünften Variante;
- Figur 19: eine Seitenansicht der Variante gemäß Figur 18;
- Figur 20: eine perspektivische Ansicht einer nicht erfindungsgemäßen Befestigungsvorrichtung gemäß einer sechsten Variante;
- Figur 21: eine Seitenansicht der Variante gemäß Figur 20 in Einbaulage;
- Figur 22: eine Seitenansicht der Variante gemäß Figur 20 in Endlage; und
- Figur 23: eine Seitenansicht in Richtung des Pfeils XXIII gemäß Figur 21.

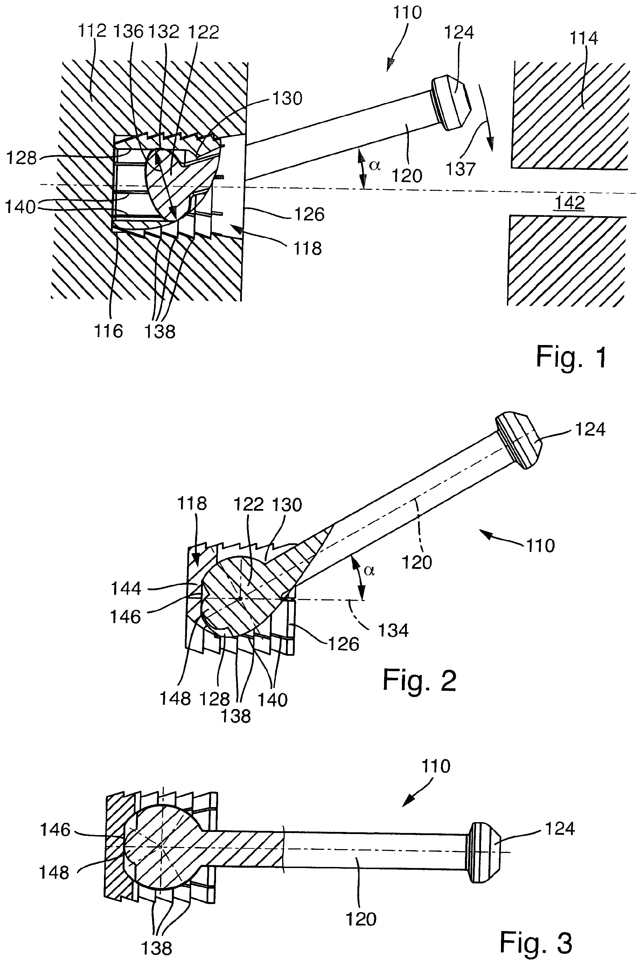

Die Figur 1 zeigt eine erste Variante gemäß einem ersten Ausführungsbeispiel, bei welchem mit dem Bezugszeichen 110 eine Befestigungsvorrichtung bezeichnet ist. Mit dieser Befestigungsvorrichtung 110 können z.B. zwei (nur andeutungsweise dargestellte) Möbelteile 112 und 114 miteinander verbunden werden, indem im ersten Möbelteil 112 ein Sackloch 116 oder eine Durchgangsöffnung eingebracht wird, in welche ein Dübel 118 eingeschoben wird. Der Dübel 118 wird zuvor mit einem Verbindungselement 120 bestückt, das mit seinem einen Ende 122 im Dübel 118 verbleibt und mit seinem anderen, freien Ende 124 aus dem Dübel 118 heraustritt und diesen axial überragt.

Der Dübel 118 ist hülsenartig ausgebildet, so dass das Ende 122 des Verbindungselements 120 vom hinteren, im Möbelteil 112 sich befindenden Ende im Dübel 118 fixiert werden kann. Außerdem weist der Dübel 118 einen, dem hinteren Ende gegenüber liegenden Rand 126 auf, der bündig mit dem Sackloch 116 abschließt.

Der hülsenförmige Dübel 118 besitzt einen Aufnahmeraum 128, in welchem das Ende 122 des Verbindungselements 120 gelagert ist. Der Aufnahmeraum 128 besitzt einen kreisrunden Querschnitt, der sich in Richtung des Randes 126 verjüngt und einen Innenumfangswulst 130 bildet. Zwischen diesem Innenumfangswulst 130 und dem vom Rand 126 gebildeten freien Ende des Dübels 118 erweitert sich der Aufnahmeraum 128 wieder kegelstumpfförmig.

Aus der Figur 1 ist deutlich erkennbar, dass das im Aufnahmeraum 128 sich befindende Ende 122 des Verbindungselements 120 ellipsoid ausgebildet ist und mit seiner Berührungslinie 132 an der Innenseite des Aufnahmeraumes 128 anliegt. Das Verbindungselement 120 ist gegenüber der axialen Längsachse 134 des Dübels 118 um den Winkel α geneigt, so dass das ellipsoide Ende 122 im Aufnahmeraum 128 ebenfalls geneigt ist. Die Hauptlängsachse 136 des ellipsoiden Endes 122 liegt in der Kippachse des Verbindungselements 120, die der Zeichenebene entspricht.

Ein Verlieren des Verbindungselements 120 vom Dübel 118 wird vom Innenumfangswulst 130 verhindert, der das Ende 122 zurück hält. Außerdem ist in der Figur 1 erkennbar, dass der in Richtung des Randes 126 sich kegelstumpfförmig erweiternde Aufnahmeraum 128 ein Verschwenken des Verbindungselements 120 um den Winkel α erlaubt.

Wird das Verbindungselement 120 in Richtung der Längsachse 134 des Dübels 118 verschwenkt, was mit dem Pfeil 137 angedeutet ist, dann stellt sich das ellipsoide Ende 122 im Aufnahmeraum 128 auf. Da die Hauptlängsachse 136 des ellipsoiden Endes 122 nun orthogonal zur Längsachse 134 des Dübels 118 steht, wird der Aufnahmeraum 128 vom Ende 122 aufgeweitet und die Dübelwandabschnitte werden radial nach außen gedrängt. Dadurch graben sich die sägezahnartigen Zähne 138 in das Material des Möbelteils 112 ein und fixieren den Dübel 118 im Sackloch 116.

Die Flexibilität des Dübels 118 wird in Bezug zu seiner Radialrichtung erhöht und die Verlagerung der Dübelwandabschnitte wird erleichtert, indem die Dübelwand mit axialen Schlitzen 140 versehen wird. Befindet sich das Verbindungselement 120 in der Längsachse 134 des Dübels 118, dann kann das andere Möbelteil 114 auf das Verbindungselement 120 aufgesteckt und das Ende 124 im Aufnahmeraum 142 des anderen Möbelteils 114 in nicht dargestellte Art und Weise verankert werden. Die beiden Möbelteile 112 und 114 sind dann miteinander verbunden und das Verbindungselement 120 gegen Kippen gesichert.

Die Figuren 2 und 3 zeigen ein zweites Ausführungsbeispiel der ersten Variante, wobei gleiche Bauelemente mit gleichen Bezugszeichen bezeichnet sind. Das freie Ende 122 des Verbindungselements 120 ist teilkugelförmig ausgebildet und sitzt in einem kalottenförmigen Aufnahmeraum 128 des Dübels 118. Der Dübel 118 selbst ist topfförmig ausgebildet und weist einen Topfboden 144 auf. Es ist erkennbar, dass der kalottenförmige Aufnahmeraum 128 am Topfboden 144 eine Abflachung 146 aufweist. Auch bei dieser Ausführungsform verjüngt sich der Aufnahmeraum 128 des Dübels 118 in Richtung des Randes 126 und bildet einen Innenumfangswulst 130. Zwischen diesem Innenumfangswulst 130 und dem vom Rand 126 gebildeten freien Ende des Dübels 118 erweitert sich der Aufnahmeraum 128 wieder kegelstumpfförmig.

Außerdem ist erkennbar, dass das teilkugelförmige freie Ende 122 des Verbindungselements 120 mit einer axialen Verdickung 148 versehen ist, die in der in der Figur 2 dargestellten Einbaulage, d.h. bei gekipptem Verbindungselement 120, im Übergang des kalottenförmigen Aufnahmeraum 128 zur Abflachung 146 liegt.

Wird das Verbindungselement 120 um den Winkel α verschwenkt, so dass es koaxial zur Längsachse 134 des Dübels 118 zu liegen kommt, dann wird die Verdickung 148 auf die Abflachung 146 geschoben und verlagert das teilkugelförmige freie Ende 122 axial in Richtung des Innenumfangswulsts 130 und des Randes 126. Der kalottenförmige Ausnahmeraum 128 wird dabei derart verformt, dass er im Bereich des Innenumfangswulsts 130 aufgespreizt wird. Dies wird durch Axialschlitze 140 unterstützt, die sich bis in den Rand 126 fortsetzen und frei auslaufen. Dadurch graben sich die sägezahnartigen Zähne 138 in das Material des Möbelteils 112 ein und fixieren den Dübel 118 im Sackloch 116. Nun befindet sich das Verbindungselement 120 in der Längsachse 134 des Dübels 118, so dass das andere Möbelteil 114 auf das Verbindungselement 120 aufgesteckt und das Ende 124 im Aufnahmeraum 142 verankert werden kann. Die beiden Möbelteile 112 und 114 sind dann miteinander verbunden und das Verbindungselement 120 gegen Kippen gesichert.

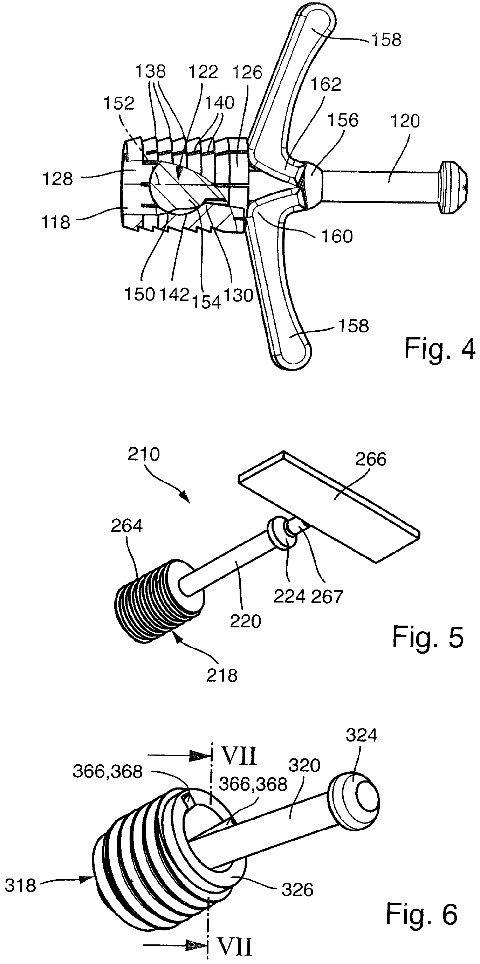

Die Figur 4 zeigt ein weiteres Ausführungsbeispiel der ersten Variante, wobei gleiche Bauelemente mit gleichen Bezugszeichen bezeichnet sind. Der Dübel 118 ist hülsenförmig ausgebildet und weist einen Aufnahmeraum 142 auf, der mit zwei Innenumfangswulsten 130 und 150 versehen ist, wobei der zweite Innenumfangswulst 150 vom Rand 126 abgewandt ist. Zwischen den Innenumfangswulsten 130 und 150 ist der teilkalottenförmige Aufnahmeraum 142 ausgebildet in welchem in der Endlage das freie Ende 122 zu liegen kommt.

Das freie Ende 122 besitzt einen endständigen teilkugelförmigen Abschnitt 152, der in einen zylinderförmigen Abschnitt 154 mit einem geringeren Durchmesser übergeht. Der Übergang vom teilkugelförmigen Abschnitt 152 in den zylinderförmigen Abschnitt 154 erfolgt über eine sich verjüngende Rampe. Ebenfalls erfolgt der Übergang beidseits des Innenumfangswulstes 150 und des Innenumfangswulstes 130 jeweils rampenartig.

Wird das Verbindungselement 120 in den Dübel 118 vom im Möbelteil 112 inneren Ende aus eingesetzt, dann ruht der teilkugelförmige Abschnitt 152 jenseits des Innenumfangswulstes 150 im zylinderförmigen Teil des Aufnahmeraumes 128.

Am mittleren Abschnitt des Verbindungselements 120 zwischen den beiden Enden 122 und 124 befindet sich außerhalb des Dübels 118 eine Verdickung oder ein Umfangswulst 156, an welchem zwei L-förmige Hebel 158 angreifen, die sich mit ihrem Knie 160 am Rand 126 des Dübels 118 abstützen. Eine Verschwenkung des Hebels 158 und Aufstellung des am Umfangswulst 156 angreifenden Hebelfußes 162 bewirkt eine axiale Verlagerung des Verbindungselements 120, indem dieses aus dem Dübel 118 heraus gezogen wird. Dabei wird, wie in Figur 4 angedeutet, der teilkugelförmige Abschnitt 152 über die Rampe in Richtung und schlussendlich über den Innenumfangswulst 150 geschoben, so dass der teilkugelförmige Abschnitt 152 im teilkalottenförmigen Aufnahmeraum 142 zwischen den beiden Innenumfangswülsten 150 und 130 zu liegen kommt.

Da der teilkalottenförmige Aufnahmeraum 142 einen kleineren Innenumfangsdurchmesser aufweist als der zylindrische Abschnitt des Aufnahmeraums 128, werden die Dübelwandabschnitte radial nach außen verlagert und der Dübel 118 radial erweitert. Dies wird wiederum durch die in Längsrichtung verlaufenden, in Richtung des Randes 126 offenen Schlitze 140 erleichtert, so dass sich die sägezahnartigen Zähne 138 optimal in das Material des den Dübel 118 umgebenden ersten Möbelteils 112 eingraben können.

Die Figur 5 zeigt eine zweite Variante, bei welcher mit dem Bezugszeichen 210 eine Befestigungsvorrichtung bezeichnet ist. Mit dieser Befestigungsvorrichtung 210 können z.B. zwei (nicht dargestellte) Möbelteile miteinander verbunden werden, indem im ersten Möbelteil ein Sackloch oder eine Durchgangsöffnung eingebracht wird, in welche ein Dübel 218 eingeschoben wird. Der Dübel 218 weist ein Verbindungselement 220 auf, das einteilig mit diesem verbunden ist, insbesondere die beiden Elemente einstückig sind. Dabei kann der Dübel 218 massiv oder hohl ausgeführt sein.

Der Dübel 218 ist zylinderförmig ausgebildet und weist ein Außengewinde 264 auf, welches z.B. selbstschneidend ausgeführt ist. Koaxial vom Dübel 218 weg erstreckt sich das Verbindungselement 220, das ein vom Dübel 218 weg weisendes Ende 224 aufweist, welches später im zweiten Möbelteil verankert wird. An diesem Ende 224 befindet sich in axialer Richtung ein Anguss 266, dessen radiale Abmessung eine Länge aufweist, die 100% bis 500%, insbesondere 150% bis 300%, bevorzugt, 200% des Durchmessers des Dübels 218 entspricht. Mittels dieses Angusses 266 kann auf einfache Weise ein Drehmoment auf das Verbindungselement 220 und auf den Dübel 218 übertragen werden. Um das zu übertragende Drehmoment zu begrenzen, befindet sich zwischen dem Verbindungselement 220 und dem Anguss 266 eine Sollbruchstelle 268, die bei Erreichen des maximalen Drehmoments bricht. Die erfindungsgemäße Befestigungsvorrichtung 210 kann somit manuell montiert werden.

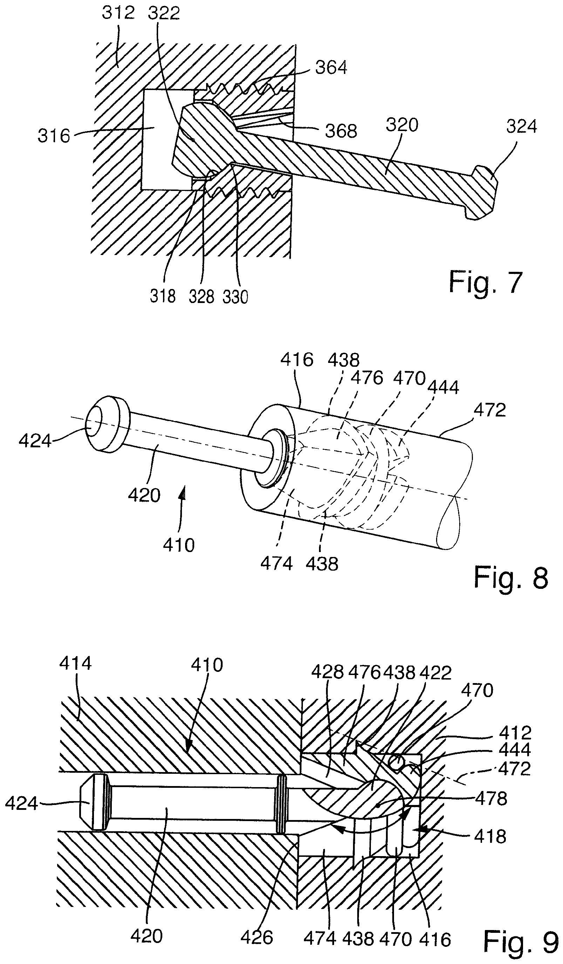

Die Figuren 6 und 7 zeigen eine Variante der Erfindung, bei welcher mit dem Bezugszeichen 310 eine Befestigungsvorrichtung bezeichnet ist. Mit dieser Befestigungsvorrichtung 310 können z.B. zwei Möbelteile miteinander verbunden werden, indem im ersten, nur andeutungsweise dargestellten Möbelteil 312 ein Sackloch 316 oder eine Durchgangsöffnung eingebracht wird, in welches ein Dübel 318 eingeschoben wird. Der Dübel 318 wird zuvor mit einem Verbindungselement 320 bestückt, das mit seinem einen Ende 322 im Dübel 318 verbleibt und mit seinem anderen, freien Ende 324 aus dem Dübel 318 heraustritt und diesen axial überragt. Der Dübel 318 ist hülsenartig ausgebildet, so dass das Verbindungselement 320 vom hinteren, im Möbelteil sich befindenden Ende in den Dübel 318 eingeschoben werden kann. Außerdem weist der Dübel 318 einen dem hinteren Ende gegenüber liegenden Rand 326 auf, der bündig mit dem Sackloch 316 abschließt. Der Dübel 318 ist zylinderförmig ausgebildet und weist ein Außengewinde 364 auf, welches z.B. selbstschneidend ausgeführt ist.

Aus Figur 7 ist erkennbar, dass das Ende 322 des Verbindungselements 320 teilkugelförmig ausgebildet ist und in einem teilkalottenförmigen Aufnahmeraum 328 im Dübel 318 schwenkbar geführt ist. Der teilkalottenförmige Aufnahmeraum 328 verjüngt sich in Richtung des Randes 326 und bildet einen Innenumfangswulst 330, ab dem er sich dann bis zum Rand 326 wieder kegelstumpfförmig erweitert.

Die Figur 6 zeigt, dass vom Rand 326 ausgehend zwei als Werkzeugangriffsflächen 366 ausgebildete Nuten 368 vorgesehen sind, die sich an der Innenumfangsfläche des Dübels 318 in axialer Richtung erstrecken. Die Nuten 368 befinden sich im kegelstumpfförmigen Anschnitt des Aufnahmeraumes 328 und sind bezüglich der Längsachse des Dübels 318 um 90° zueinander versetzt.

In diese Nuten 368 kann ein geeignetes Werkzeug, z.B. ein Schrauben- oder Kreuzschlitzdreher, Hakenschlüssel oder dergleichen eingeschoben werden, wenn das Verbindungselement 320, wie in den Figuren 6 und 7 dargestellt, im kegelstumpfförmigen Abschnitt des Aufnahmeraumes 328 von den Nuten 368 weg gekippt ist. Mittels dieses in die Nuten 368 eingesetzten Werkzeugs kann der Dübel 318 in das Sackloch 316 des Möbelteils 312 eingedreht werden.

Die Figuren 8 und 9 zeigen eine vierte Variante gemäß einem ersten Ausführungsbeispiel, bei welchem mit dem Bezugszeichen 410 eine Befestigungsvorrichtung bezeichnet ist. Mit dieser Befestigungsvorrichtung 410 können z.B. zwei (nur andeutungsweise dargestellte) Möbelteile 412 und 414 miteinander verbunden werden, indem im ersten Möbelteil 412 ein Sackloch 416 oder eine Durchgangsöffnung eingebracht wird, in welche ein Dübel 418 eingeschoben wird. Der Dübel 418 wird zuvor mit einem Verbindungselement 420 bestückt, das mit seinem einen Ende 422 im Dübel 418 gelagert ist und mit seinem anderen, freien Ende 424 aus dem Dübel 418 heraustritt und diesen axial überragt. Der Dübel 418 ist im Wesentlichen zweiteilig ausgebildet, wobei die beiden Dübelelemente 474 und 476 um das Ende 422 des Verbindungselements 420 schwenkbar gelagert sind. Außerdem weist der Dübel 418 einen dem hinteren Ende gegenüber liegenden Rand 426 auf, der bündig mit dem Sackloch 416 abschließt.

Die beiden Dübelelemente 474 und 476 sind nach Art eines Topfbodens und klammerartig ausgebildet und besitzen einen in Richtung des Bodens des Sackloches 416 weisenden Topfboden 444, der einen Aufnahmeraum 428 bodenseitig abschließt und einen kalottenförmigen Abschnitt begrenzt, in welchem das kugelförmige Ende 422 des Verbindungselements 420 sitzt. Die einander zugewandten Flächen der beiden Dübelelemente 474 und 476 weisen jeweils einen stumpfen Winkel δ von 155° auf und können um das Zentrum 478 des kugelförmigen Endes 422 des Verbindungselements 420 verschwenken.

In der Figur 8, die die Einbaulage darstellt, liegen die dem Verbindungselement 420 zugewandten Abschnitte der beiden Dübelelemente 474 und 476 aneinander an, so dass die dem Boden des Sackloches 416 zugewandten Abschnitte einen Abstand zueinander aufweisen. In dieser Schwenklage berühren der Umfangsrand des Topfbodens 444, ein Federelement, insbesondere ein R-Ring 470, sowie ein umlaufender Zahn 438 die Innenumfangsfläche des Sackloches 416 entlang einer Linie 472. Der Dübel 418 kann in das Sackloch 416 eingeschoben werden.

Sobald der Dübel 418 am Boden des Sackloches 416 anschlägt, werden die beiden Dübelelemente 474 und 476 um das Zentrum 478 des kugelförmigen Endes 422 des Verbindungselements 420 verschwenkt, und die dem Boden des Sackloches 416 zugewandten Abschnitte der beiden Dübelelemente 474 und 476 liegen aneinander an. Diese Stellung der beiden Dübelelemente 474 und 476 ist in der Figur 9 dargestellt, wobei dort mit der Linie 472 die Flucht des Umfangsrands der Topfbodens 444, der O-Ring 470 sowie der umlaufender Zahn 438 angedeutet ist. Der Zahn 428 greift nun in das Material des Möbelteils 412 ein und fixiert den Dübel 418 im Sackloch 416. Diese Stellung der beiden Dübelelemente 474 und 476 wird außerdem vom O-Ring 470 unterstützt, der die beiden die dem Boden des Sackloches 416 zugewandten Abschnitte der beiden Dübelelemente 474 und 476 in Berührungslage aneinander hält.

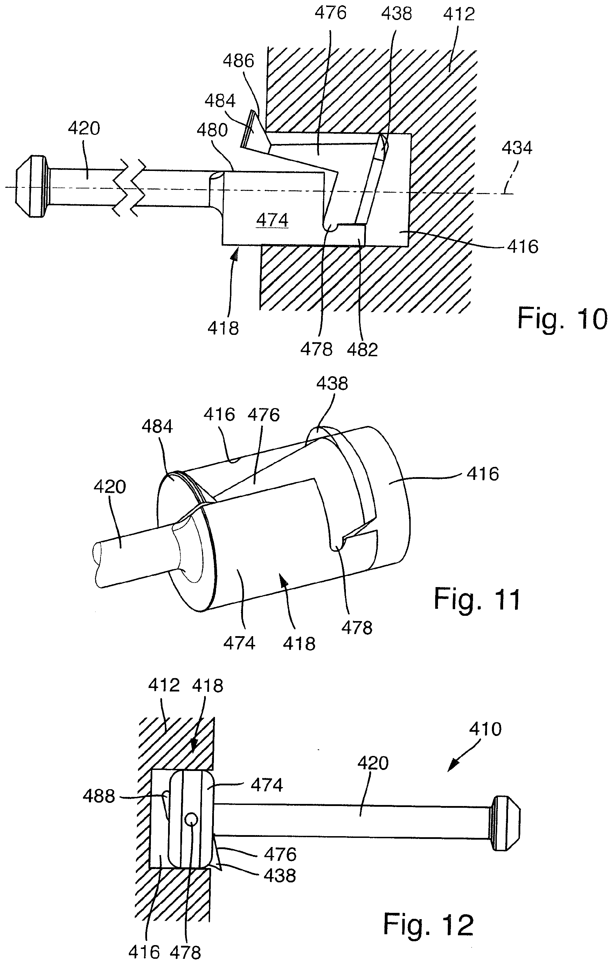

Die Figuren 10 und 11 zeigen die vierte Variante gemäß einem zweiten Ausführungsbeispiel. Dabei ist der Dübel 418 ebenfalls zweiteilig ausgebildet, wobei das Verbindungelement 420 und ein Dübelelement 474 einteilig ausgebildet sind und das andere Dübelelement 476 über ein Scharnier 478 an ersten Dübelelement 474 schwenkbar gelagert ist. Das erste Dübelelement 474 besitzt einen teilzylinderförmigen Körper, an dessen, dem Boden des Sackloches 416 zugewandten Seite und orthogonal der Abschnittsebene 480 gegenüber liegend, ein Fortsatz 482 angeformt ist, welches das Lager des Scharniers 478 trägt.

Das zweite Dübelelement 476 ist L-förmig oder abgewinkelt ausgebildet, wobei der lange Schenkel im Wesentlichen parallel zur Längsachse 434 des Dübels 418 liegt und der Abschnittsebene 480 zugewandt ist. Der kurze Schenkel hintergreift den teilzylinderförmigen Körper des ersten Dübelelements 474 und endet als Lagerbolzen für das Scharnier 478. An der Außenseite des Knies des zweiten Dübelelements 476 befindet sich ein radial abragender Zahn 438, der im Wesentlichen dem Scharnier 478 gegenüber liegt. Das freie Ende des langen Schenkels ist mit einem radial abragenden Lenker 484 versehen. Der Zahn 438 liegt in axialer Richtung gesehen bezüglich des Scharniers 478 auf der einen, dem Boden des Sacklochs 416 zugewandten Seite und der Lenker 484 ist der Öffnung des Sacklochs 416 zugewandt.

In der Einbaulage des Dübels 418 ist das zweite Dübelelement 476 so gekippt, dass der Zahn 438 dem Boden des Sacklochs 416 zugewandt ist und der lange Schenkel des zweiten Dübelelements 476 von der Abschnittsebene 480 des ersten Dübelelements 474 weg weist. Der Lenker 484 nimmt in dieser Einbaulage eine Position ein, in der er radial am weitesten von der Längsachse 434 entfernt ist. Der Zahn 438 nimmt dagegen eine Position ein, in der er seinen radial kleinsten Abstand zur Längsachse 434 einnimmt. Der Dübel 418 kann so lange ins Sackloch 416 eingeschoben werden, bis der Lenker 484 an den Rand des Sackloches 416 anschlägt. Da der Lenker 484 eine Auflaufschräge 486 aufweist, wird er durch weiteres Einschieben des Dübels 418 in das Sackloch 416 radial in Richtung der Längsachse 434 verschoben, wodurch der Zahn 438 radial nach außen und allmählich in das Material des Möbelteils 412 geschoben wird.

Bei vollständigen Einschub des Dübels 418 in das Sackloch 416 ist dessen Endlage erreicht und der Lenker 484 befindet sich ebenfalls im Sackloch 416. Der lange Schenkel liegt an der Abschnittsebene 480 des ersten Dübelelements 474 an und der Zahn 438 ist maximal in das Material des Möbelteils 412 eingegraben. Ein Auszug des Dübels 418 wird verhindert, da der Zahn 438 nicht zurückgezogen und das zweite Dübelelement 476 nicht gekippt werden.

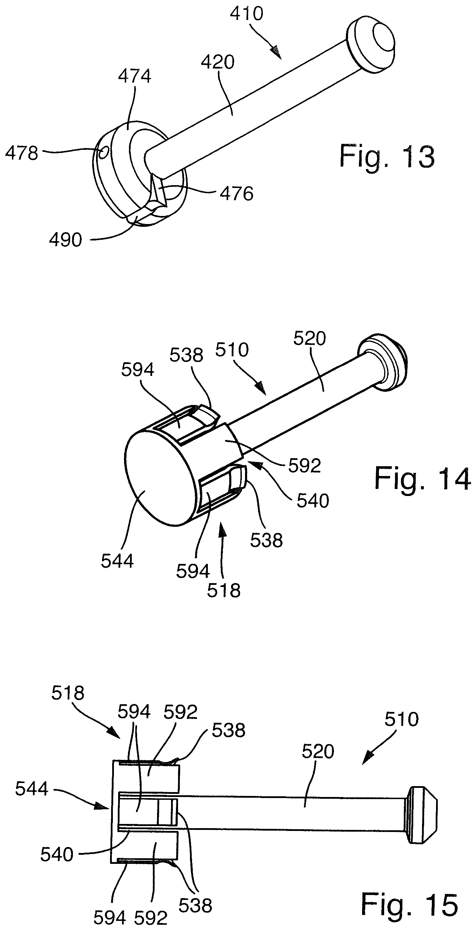

Die Figuren 12 und 13 zeigen die vierte Variante gemäß einem dritten Ausführungsbeispiel. Dabei ist der Dübel 418 ebenfalls zweiteilig ausgebildet, wobei das Verbindungelement 420 und ein Dübelelement 474 einteilig oder einstückig ausgebildet sind und das andere Dübelelement 476 über ein Schwenklager 478 am ersten Dübelelement 474 schwenkbar gelagert ist.

Das erste Dübelelement 474 besitzt einen zylinderförmigen Körper, wobei das Schwenklager 478 den Körper diagonal durchsetzt. Das zweite Dübelelement 476 wird vom Schwenklager 478 derart etwa mittig durchgriffen, dass der eine Teil nach Art einer Nase 488 das erste Dübelelement 474 axial überragt. Der andere, dem Schwenklager 478 gegenüber liegende Teil des zweiten Dübelelements 476 ist als Zahn 438 ausgebildet. Zur Lagerung des zweiten Dübelelements 476 weist das erste Dübelelement 474 einen radialen Schlitz 490 auf, der vom Schwenklager 478 durchgriffen ist. Somit kann das zweite Dübelelement 476 im Schlitz 490 pendelnd im ersten Dübelelement 474 geführt werden.

In der Einbaulage des Dübels 418 überragt die Nase 488 das erste Dübelelement 474 in axialer Richtung und ist dem Boden des Sackloches 416 zugeneigt, wohingegen der Zahn 438 die Umfangsfläche des ersten Dübelelements 474 nicht überragt sondern axial in Richtung des Verbindungelements 420 geneigt ist. Sobald die Nase 488 am Boden des Sackloches 416 anschlägt, wird das zweite Dübelelement 476 um das Schwenklager 478 gekippt. Dabei wird die Nase 488 in den Schlitz 490 axial eingeschoben und der Zahn 438 fährt radial aus und überragt die Umfangsfläche des ersten Dübelelements 474. Dabei gräbt sich der Zahn 438 in das Material des Möbelteils 412 ein. Ein Auszug des Dübels 418 wird verhindert, da der Zahn 438 nicht zurückgezogen und das zweite Dübelelement 476 nicht gekippt werden.

Die Figuren 14 und 15 zeigen eine fünfte Variante gemäß einem ersten Ausführungsbeispiel, bei welchem mit dem Bezugszeichen 510 eine Befestigungsvorrichtung bezeichnet ist. Mit dieser Befestigungsvorrichtung 510 können z.B. zwei (nicht dargestellte) Möbelteile miteinander verbunden werden, indem im ersten Möbelteil ein Sackloch oder eine Durchgangsöffnung eingebracht wird, in welche ein Dübel 518 eingeschoben wird.

Der Dübel 518 weist ein Verbindungselement 520 auf, das einteilig mit diesem verbunden ist, insbesondere die beiden Elemente einstückig sind. Dabei ist der Dübel 518 topfartig ausgeführt und das Verbindungselement 520 ragt von der Innenseite des Bodens 544 des Topfes ab. Die Topfwand weist vier axial vom Topfboden 544 abragende, gleichmäßig verteilt angeordnete erste Wandsegmenten 592 auf, zwischen denen jeweils ein federndes zweites Wandsegment 594 angeordnet ist, das ebenfalls mit dem Topfboden 544 verbunden ist und sich parallel zu den ersten Wandsegmenten 592 erstreckt.

Die zweiten Wandsegmente 594 sind in radialer Richtung federnd ausgebildet und weisen ein freies Ende auf, das schneidenartig ausgeführt ist und in Form eines Zahnes 538 radial nach außen und weg vom Topfboden 544 weist. Die ersten Wandsegmente 592 sind an ihren freien Enden radial innen angeschliffen und bilden ebenfalls einen Zahn 538. Auch die ersten Wandsegmente 592 können mit ihren Zähnen 538 radial nach außen vorgespannt sein. Dadurch, dass der Dübel 518 aus Metall, insbesondere aus Edelstahl besteht, sind die Schneiden der Zähne 538 relativ scharfkantig.

Zwischen den Wandsegmenten 592 und 594 erstecken sich axial verlaufende Schlitze 540, so dass die federnden Wandsegmente 592 und 594 radial nach innen verformt werden können. In der Einbaulage überragen die Zähne 538 der federnden Wandsegmente 594 die Umfangsfläche der ersten Wandsegmente 592, so dass sie beim Einschieben des Dübels 518 in das Sackloch oder die Durchgangsöffnung des ersten Möbelelements geringfügig radial eingedrückt werden. Sie stehen dann unter Vorspannung. Die Endlage ist erreicht, sobald der Dübel 518 vollständig in das erste Möbelelement eingeschoben ist. Ein Herausziehen des Dübels 518 wird von den sägezahnartigen Zähnen 538, deren Rampe dem Topfboden 544 zugewandt ist und die unter Vorspannung keilartig in das den Dübel 518 umgebende Material eingreifen, verhindert.

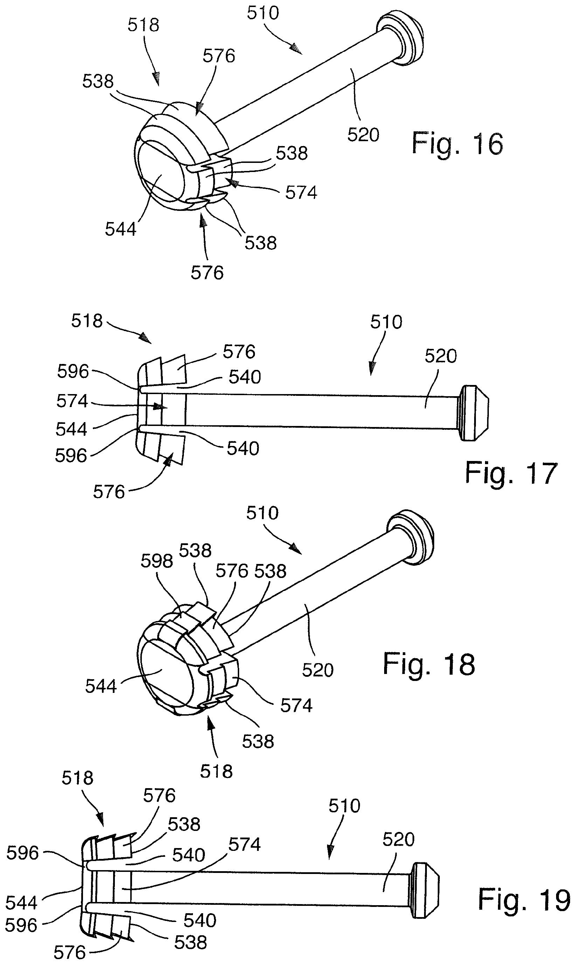

Die Figuren 16 und 17 zeigen die fünfte Variante gemäß einem zweiten Ausführungsbeispiel. Dabei ist der Dübel 518 massiv und dreiteilig ausgebildet, wobei das Verbindungelement 520 und ein erstes Dübelelement 574 einteilig ausgebildet sind. Das erste Dübelelement 574 und die beiden zweiten, das erste Dübelelement 574 beidseitig flankierenden zweiten Dübelelemente 576 sind im Wesentlichen W-förmig angeordnet und werden von einem, dem Verbindungselement 520 gegenüber liegenden Boden 544 miteinander verbunden. Zwischen den Dübelelementen 574 und 576 erstrecken sich zwei axiale Schlitze 540, so dass die beiden zweiten Dübelelemente 576 in radialer Richtung elastisch federnd mit dem Boden 544 in Verbindung stehen.

Diese Verbindung 596 kann dünnwandig oder als Filmscharnier ausgeführt sein.

Ferner ist in den Figuren 16 und 17 erkennbar, dass die Dübelelemente 574 und 576 an ihrer Umfangsfläche jeweils zwei in axialer Richtung hintereinander stehende Zähne 538 ausweisen, die sägezahnartig ausgeführt sind und deren eine Rampe dem Boden 544 zugewandt ist und die andere Zahnflanke orthogonal zum Verbindungselement 510 steht oder sogar negativ geneigt ist, d.h. eine Hohlkehle bildet.

In der Einbaulage überragen die Zähne 538 den Durchmesser des Sackloches oder der Durchgangsbohrung des ersten Möbelelements und werden beim Einschieben des Dübels 518 in das Sackloch oder die Durchgangsöffnung geringfügig radial eingedrückt, wodurch sich der Schlitz 540 verkleinert. Die Endlage ist erreicht, sobald der Dübel 518 vollständig in das erste Möbelelement eingeschoben ist.

Beim Herausziehen des Dübels 518 wird mittels des Verbindungselements 520 das erste Dübelelement 574 zunächst geringfügig axial verlagert. Diese Verlagerung bewirkt an der Verbindung 596 oder am Filmscharnier, dass die zweiten Dübelelemente 576 um das Filmscharnier nach außen gekippt werden, so dass sich deren Zähne 538 in das sie umgebende Material des ersten Möbelteils weiter eingraben.

Die Figuren 18 und 19 zeigen die fünfte Variante gemäß einem dritten Ausführungsbeispiel. Dabei ist der Dübel 518 ebenfalls dreiteilig und massiv ausgebildet. Im Gegensatz zum Ausführungsbeispiel der Figuren 16 und 17 weisen das erste Dübelelement 574 und die beiden zweiten Dübelelemente 576 jeweils drei axial hintereinander liegende Zähne 538 auf. Die Dübelelement 574 und 576 sind also dreizahnig ausgeführt.

Die beiden zweiten Dübelelemente 576 sind an ihren einander gegenüber liegenden Seiten und senkrecht zu den Schlitzen 540 mit axialen Nuten versehen, in denen jeweils eine im Wesentlichen axial verlaufende Klinge 598 mit drei Zähnen 538 liegt, die radial federnd gelagert ist. Die Zähne 538 der Klinge 598 überragen die der Klinge 598 benachbarten Zähne 538 radial und axial. Dabei kann die Klinge 598 aus Stahl, insbesondere Edelstahl oder Federstahl bestehen, und der restliche Dübel 518 und das Verbindungselement 520 aus Kunststoff, Stahl oder Edelstahl.

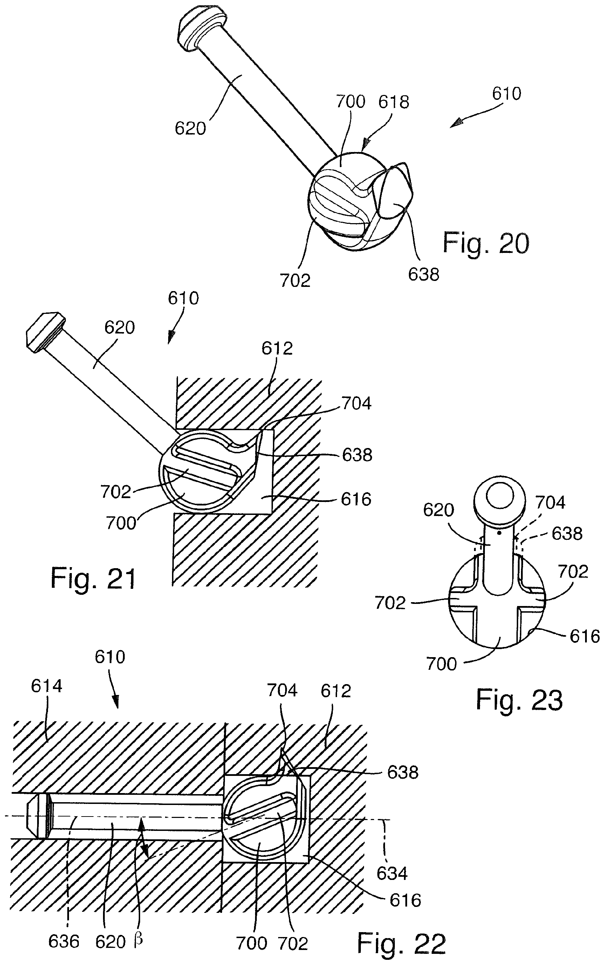

Die Figuren 20 bis 23 zeigen eine sechste Variante, bei welchem mit dem Bezugszeichen 610 eine Befestigungsvorrichtung bezeichnet ist. Mit dieser Befestigungsvorrichtung 610 können z.B. zwei (nur andeutungsweise dargestellte) Möbelteile 612 und 614 miteinander verbunden werden, indem im ersten Möbelteil 612 ein Sackloch 616 oder eine Durchgangsöffnung eingebracht wird, in welche ein Dübel 618 eingeschoben wird. Der Dübel 618 weist ein Verbindungselement 620 auf, das einteilig mit diesem verbunden ist, insbesondere die beiden Elemente einstückig sind.

Der Dübel 618 ist im Wesentlichen kugelförmig ausgeführt und weist einen scheibenförmigen Körper 700 auf, in dessen Ebene das Verbindungselement 620 liegt und von diesem radial abragt. Von diesem Körper 700 ragt auch ein Zahn 638 ab, der sich aber in tangentialer Richtung erstreckt und gegenüber dem Verbindungselement 620 liegt.

An den beiden Flachseitenflächen des Körpers 700 ist jeweils ein scheibenabschnittsförmiger Vorsprung 702 vorgesehen, der radial abragt. Es ist in der Zeichnung, insbesondere in der Figur 23 leicht erkennbar, dass der Vorsprung 702 eine Dicke aufweist, die halb so groß ist, wie die Dicke des Körpers 700 oder die Dicke des Zahns 638. Außerdem ist erkennbar, dass die Oberflächen des Körpers 700 und der Vorsprünge 702 kugelförmig gekrümmt sind, so dass sie sich an die Innenoberfläche des Sacklochs 616 anschmiegen.

Außerdem ist, insbesondere in der Figur 22 erkennbar, dass die Ebene der Vorsprünge 702 gegenüber der Längsachse 634 des Dübels 618 um einen Winkel β von etwa 25° geneigt sind. Ferner besitzt der Zahn 638 eine Zahnschneide 704, deren eine Zahnflanke senkrecht von der Oberfläche des Körpers 700 abragt und dessen andere Zahnflanke im Wesentlichen tangential zum Körper 700 steht.

In der Einbaulage wird die Befestigungsvorrichtung 610, wie in Figur 21 dargestellt, mit ihrem Körper 700 derart in das Sackloch 616 verschwenkt, dass der Körper 700 mit dem Zahn 638 voraus in das Sackloch 616 eingeführt werden kann. Sobald das Verbindungselement 620 an den Rand der Sackloches 616 anschlägt, wird dieses um die Zahnschneide 704 gekippt. Dabei gräbt sich einerseits die Zahnschneide 704 in das Material des ersten Möbelteils 612 ein, indem sich der Körper 700 an der dem Zahn 638 gegenüber liegenden Seite an der Innenwand des Sacklochs 616 abstützt und gleichzeitig in das Sackloch 616 schiebt. Dies erfolgt so lange, bis der Zahn 638 seine Endlage erreicht und orthogonal zur Längsachse 634 des Sacklochs 616 steht und der Körper 700 sich vollständig im Sackloch 616 befindet.

Die Hauptlängsachse 636 des Verbindungselements 620 liegt nun koaxial zur Längsachse des Sachlochs 616. Außerdem liegt nun der tangentiale Abschnitt des Zahns 738 am Boden des Sacklochs 616 an. Da der Körper 700 und die Vorsprünge 702 einerseits scheibenförmig ausgebildet und ihre Umfangsflächen kugelförmig ausgeführt sind, kann der Dübel 618 im Sackloch 616 gekippt werden.

## Patentansprüche

1. Befestigungsvorrichtung (310) mit einem Dübel (318) und einem am Dübel (318) fixierten Verbindungselement (320) zum Befestigen eines ersten Möbelteils (312) an einem zweiten Möbelteil, wobei der Dübel (318) in einem Sackloch (316) oder in einer Durchgangsöffnung des einen Möbelteils (312) lagerbar und mittels des Verbindungselements (320) fixierbar ist, wobei der Dübel (318) mit einem Außengewinde (364) versehen ist, und der Dübel (318) Werkzeugangriffsflächen (366) aufweist, in welche ein Werkzeug einsteckbar ist, über das der Dübel (318) im Sackloch (316) oder in der Durchgangsöffnung in seine Endlage eindrehbar ist, wobei das im Dübel (318) sich befindende Ende (322) des Verbindungselements (320) kugelförmig ausgebildet ist und der Dübel (318) zur Aufnahme und Halterung des Endes (322) eine Kugelpfanne aufweist, **dadurch gekennzeichnet, dass** die Werkzeugangriffsflächen (366) von wenigstens einer Nut (368) gebildet ist, die radial nach innen und axial in Richtung des Verbindungselements (320) offen ist.

2. Befestigungsvorrichtung nach Anspruch 1, **dadurch gekennzeichnet, dass** zwei im Winkel, insbesondere rechten Winkel, zueinander stehende Nuten (368) vorhanden sind.

3. Befestigungsvorrichtung nach Anspruch 1 oder 2, **dadurch gekennzeichnet, dass** in die Nut oder Nuten (368) ein Schrauben- oder Kreuzschlitzdreher einsetzbar ist.

4. Befestigungsvorrichtung nach einem der vorhergehenden Ansprüche, **dadurch gekennzeichnet, dass** sich im Dübel (318) an die Kugelpfanne ein sich öffnender Kegelstumpf anschließt, in welchem das Verbindungselement (320) von der Nut oder den Nuten (368) weg bewegbar, insbesondere weggekippt ist.

## Claims

1. Fastening device (310) with a dowel (318) and a connecting element (320) fixed to the dowel (318) for attaching a first furniture part (312) to a second furniture part, wherein the dowel (318) may be mounted in a blind hole (316) or in a through hole of the one furniture part (312) and may be fixed by means of the connecting element (320), wherein the dowel (318) is provided with an external thread (364), and the dowel (318) has tool application surfaces (366) in which a tool may be inserted, by which the dowel (318) may be screwed into its final position in the blind hole (316) or in the through hole, wherein the end (322) of the connecting element (320) in the dowel (318) is spherical and the dowel (318) has a ball socket for seating and mounting of the end (322), **characterised in that** the tool application surfaces (366) are formed by at least one slot (368) which is open radially inwards and axially in the direction of the connecting element (320).

2. Fastening device according to claim 1, **characterised in that** there are two slots (368) at an angle, in particular a right-angle, to one another.

3. Fastening device according to claim 1 or 2, **characterised in that** a screwdriver or Phillips screwdriver may be inserted in the slot or slots (368).

4. Fastening device according to any of the preceding claims, **characterised in that** in the dowel (318) there is adjoining the ball socket an opening truncated cone, in which the connecting element (320) may be moved away, in particular tilted away, from the slot or slots (368).

## Revendications

1. Dispositif de fixation (310) avec une cheville (318) et un élément de liaison (320) fixé à la cheville (318) pour la fixation d'un premier élément de meuble (312) à un deuxième élément de meuble, dans lequel la cheville (318) peut être logée dans un trou borgne (316) ou dans une ouverture traversante de l'un élément de meuble (312) et être fixée au moyen de l'élément de liaison (320), dans lequel la cheville (318) est dotée d'un filetage extérieur (364), et la cheville (318) présente des surfaces d'attaque d'outil (366), dans lesquelles un outil peut être inséré, par le biais duquel la cheville (318) peut être vissée dans le trou borgne (316) ou dans l'ouverture traversante dans sa position finale, dans lequel l'extrémité (322), se trouvant dans la cheville (318), de l'élément de liaison (320) est réalisée de manière sphérique et la cheville (318) présente un coussinet sphérique pour la réception et le maintien de l'extrémité (322), **caractérisé en ce que** les surfaces d'attaque d'outil (366) sont formées par au moins une rainure (368) qui est ouverte radialement vers l'intérieur et axialement en direction de l'élément de liaison (320).

2. Dispositif de fixation selon la revendication 1, **caractérisé en ce que** deux rainures (368) formant un angle, en particulier un angle droit, l'une par rapport à l'autre sont présentes.

3. Dispositif de fixation selon la revendication 1 ou 2, **caractérisé en ce qu'**un tournevis ou tournevis cruciforme peut être inséré dans la rainure ou les rainures (368).

4. Dispositif de fixation selon l'une quelconque des revendications précédentes, **caractérisé en ce qu'**un cône tronqué s'ouvrant se raccorde dans la cheville (318) au coussinet sphérique, dans lequel l'élément de liaison (320) peut être éloigné, en particulier éloigné par basculement, de la rainure ou des rainures (368).
